(19) Europäisches Patentamt
European Patent Office
Office européen des brevets

(11) **EP 3 841 692 B1**

(12) **EUROPEAN PATENT SPECIFICATION**

(45) Date of publication and mention of the grant of the patent:
**15.06.2022 Bulletin 2022/24**

(21) Application number: **19759340.3**

(22) Date of filing: **23.08.2019**

(51) International Patent Classification (IPC):
**H04L 1/00** (2006.01)    **H04L 1/18** (2006.01)

(52) Cooperative Patent Classification (CPC):
**H04L 1/0067; H04L 1/1874**

(86) International application number:
**PCT/EP2019/072585**

(87) International publication number:
**WO 2020/039069 (27.02.2020 Gazette 2020/09)**

(54) **ENHANCEMENTS TO LIMITED BUFFER RATE-MATCHING**

VERBESSERUNGEN ZUR ANGLEICHUNG VON BEGRENZTEN PUFFERRATEN

AMÉLIORATIONS D'UNE CORRESPONDANCE LIMITÉE DE DÉBIT DE LA MÉMOIRE TAMPON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2018 US 201862722644 P**

(43) Date of publication of application:
**30.06.2021 Bulletin 2021/26**

(60) Divisional application:
**22168924.3**

(73) Proprietor: **Telefonaktiebolaget LM Ericsson (publ)**
**164 83 Stockholm (SE)**

(72) Inventors:
• **NIMBALKER, Ajit**
**Fremont, California 94538 (US)**
• **ANDERSSON, Mattias**
**172 39 Sundbyberg (SE)**

(74) Representative: **Ericsson**
**Patent Development**
**Torshamnsgatan 21-23**
**164 80 Stockholm (SE)**

(56) References cited:
• **MEDIATEK INC: "eMBB Encoding Chain", 3GPP DRAFT; R1-1704458_EMBB ENCODING CHAIN_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 25 March 2017 (2017-03-25), XP051251248, Retrieved from the Internet: URL:http://www.3gpp.org/ftp/tsg_ran/WG1_RL 1/TSGR1_88b/Docs/ [retrieved on 2017-03-25]**
• **QUALCOMM INCORPORATED: "Maintenance for DL/UL data scheduling and HARQ procedure", 3GPP DRAFT; R1-1809428_SCHED-HARQ-MAINTENANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 11 August 2018 (2018-08-11), XP051516791, Retrieved from the Internet: URL:http://www.3gpp.org/ftp/tsg%5Fran/WG1% 5FRL1/TSGR1%5F94/Docs/R1%2D1809428%2Ez ip [retrieved on 2018-08-11]**

**Description**

FIELD

The present disclosure relates to wireless communications, and in particular, to limited buffer rate-matching.

INTRODUCTION

New radio (NR) standard in 3rd Generation Partnership Project (3GPP) may be designed to provide service for multiple use cases such as enhanced mobile broadband (eMBB), ultra-reliable and low latency communication (URLLC), and machine type communication (MTC). Each of these services may have different technical requirements. For example, the general requirement for eMBB may be a high data rate with moderate latency and moderate coverage, while URLLC service may require a low latency and high reliability transmission but perhaps for moderate data rates.

One of the solutions for low latency data transmission may be to use shorter transmission time intervals. In NR, in addition to transmission in a slot, a mini-slot transmission may also be allowed to reduce latency. A mini-slot may include of any number of 1 to 14 OFDM symbols. It should be noted that the concepts of slot and mini-slot are not specific to a specific service, meaning that a mini-slot may be used for either eMBB, URLLC, or other services.

Peak rate and transport block size

Unlike Long Term Evolution, NR transmission duration for a packet, processing times, transmission bandwidths may be quite flexible, and there may be a need to ensure that a user equipment's (UE's) or wireless device's (WD's) peak decoder throughput is not exceeded given the flexible design. While there may exist limited buffer rate-matching to limit the coded bit throughput in certain cases, it can so occur that WD has to support peak data rate at lower code rates than the hardware supports. For example, the specification may allow for limiting the coded bit buffer for a reference transport block size (TBS) at rate no lower than 2/3; and this reference TBS transmitted over a certain duration (e.g., one slot) yields a peak rate supported at a mother code rate of 2/3; however, there can be smaller TBS(es) transmitted over smaller durations that can also yield peak rate, but the specification may not limit the coded bit buffer for such cases. Thus, if such TBS(es) are retransmitted, the peak rate may have to be supported at a mother code rate quite lower than 2/3. This can also happen for back-to-back scheduling, and also in case of numerology switching (such as two bandwidth parts (BWPs), each configured with 15 kHz and 30 kHz, respectively). Mediatek R1-1704458 discloses HARQ IR transmissions with different start index positions of the circular buffer data. Qualcomm Inc. R1-1809428 discloses that the UE may skip to decode a transport block.

SUMMARY

Some embodiments advantageously provide methods and apparatuses for limited buffer rate-matching that may accommodate complexity and/or decoding constraints at the WD, while also keeping the scheduler restrictions to a minimum.

The invention is defined by its independent claims 1, 4, 7, 12 while preferred embodiments are formulated in their dependent claims.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

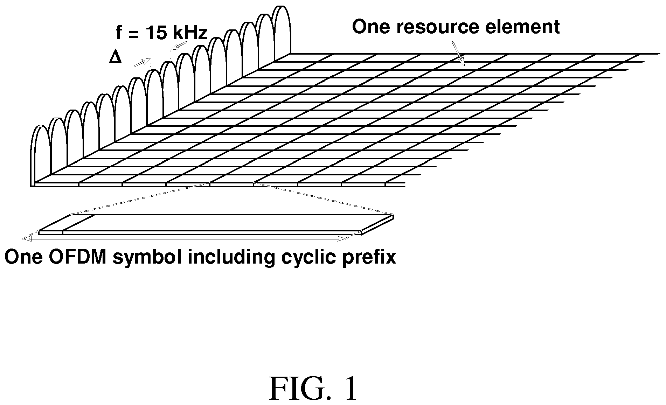

FIG. 1 illustrates an exemplary radio resource in NR;

FIG. 2 is a schematic diagram of an exemplary network architecture illustrating a communication system connected via an intermediate network to a host computer according to the principles in the present disclosure;

FIG. 3 is a block diagram of a host computer communicating via a network node with a wireless device over an at least partially wireless connection according to some embodiments of the present disclosure;

FIG. 4 is a flow chart illustrating exemplary methods implemented in a communication system including a host computer, a network node and a wireless device for executing a client application at a wireless device according to some embodiments of the present disclosure;

FIG. 5 is a flow chart illustrating exemplary methods implemented in a communication system including a host computer, a network node and a wireless device for receiving user data at a wireless device according to some embodiments of the present disclosure;

FIG. 6 is a flow chart illustrating exemplary methods implemented in a communication system including a host computer, a network node and a wireless device for receiving user data from the wireless device at a host computer according to some embodiments of the present disclosure;

FIG. 7 is a flow chart illustrating exemplary methods implemented in a communication system including a host computer, a network node and a wireless device for receiving user data at a host computer according to some embodiments of the present disclosure;

FIG. 8 is a flowchart of an exemplary process in a network node according to some embodiments of the present disclosure;

FIG. 9 is a flowchart of an exemplary process in a wireless device according to some embodiments of the present disclosure; and

FIG. 10 illustrates an example of the value of reference value, X, for a first transmission and the value of X for a second transmission, according to at least some of the principles of the present disclosure.

DETAILED DESCRIPTION

Some embodiments of the present disclosure provide a method of determining a reference value X that is used as input to a data rate computation, where the reference value X may denote a largest index corresponding to a bit within a circular buffer for a transport block that is selected either for initial transmission or a retransmission for the TB. The determination may be performed across the initial transmission and retransmission for the TB. Such formulation may allow the encoding and decoding operations to be more clearly specified, as compared to existing techniques, without confusion between a network node (e.g., gNB) and the WD.

In some embodiments, $N_{cb,i}$ is a reference size for the transport block in transmission, where i may be as defined in Technical Specification (TS) 38.212. Ncb,i may denote the largest index j corresponding to dj within the circular buffer among all dk, k = 0 to N-1 (see e.g., Sec 5.4.2.1 of TS 38.212) selected for transmission and retransmission for the TB.

Some of the embodiments provided in this disclosure can accommodate complexity and decoding constraints at the WD while also keeping the scheduler restrictions to a minimum.

Before describing in detail exemplary embodiments, it is noted that the embodiments reside primarily in combinations of apparatus components and processing steps related to limited buffer rate-matching. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible for achieving the electrical and data communication.

In some embodiments described herein, the term "coupled," "connected," and the like may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc. In some embodiments, the WD may be a network node.

Also, in some embodiments, the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

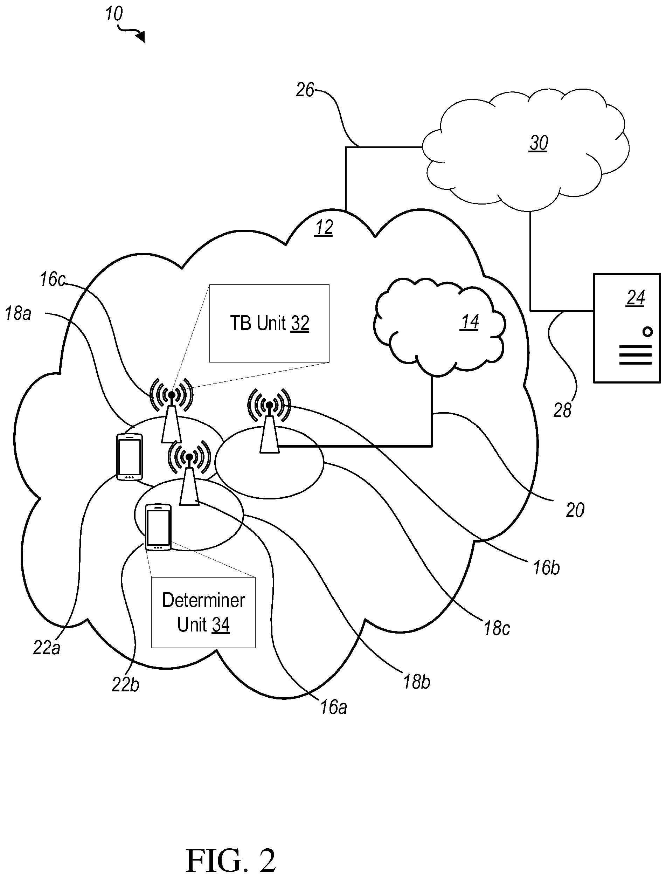

Returning to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16c. A second WD 22b in coverage area 18b is wirelessly connectable to the corresponding network node 16a. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 2 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a transport block (TB) unit 32 which is configured to at least one of receive from the WD 22 and communicate to the WD 22, information corresponding to a transport block, at least one code block of the transport block being processed based at least in part on a reference value, the reference value indicating a largest index corresponding to a bit within a circular buffer for the at least one code block of a transport block.

A wireless device 22 is configured to include a determiner unit 34 which is configured to determine a reference value, the reference value indicating a largest index corresponding to a bit within a circular buffer for at least one code block of a transport block, the at least one code block having been selected for transmission of the transport block; determine a condition based on the reference value; and based on the condition, perform an action related to processing of one or more code blocks of the transport block.

Example implementations, in accordance with an embodiment, of the WD 22, network node 16 and host computer 24 discussed in the preceding paragraphs will now be described with reference to FIG. 2. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and/or the wireless device 22. The processing circuitry 42 of the host computer 24 may include a monitor unit 54 configured to enable the service provider to observe, monitor, control, transmit to and/or receive from the network node 16 and/or the wireless device 22.

The communication system 10 further includes a network node 16 provided in a communication system 10 and comprising hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include TB unit 32 configured to at least one of receive from the WD 22 and communicate to the WD 22, information corresponding to a transport block, at least one code block of the transport block being processed based at least in part on a reference value, the reference value indicating a largest index corresponding to a bit within a circular buffer for the at least one code block of a transport block. In some embodiments, the processing based at least in part on the reference value comprises one of skip decoding and partial skip decoding a reception of one or more code blocks of the transport block, based at least in part on the reference value. In some embodiments, the processing based at least in part on the reference value comprises one of a skip transmission and a partial skip transmission for a transmission of one or more code blocks of the transport block, based at least in part on the reference value. In some embodiments, the processing based at least in part on the reference value comprises processing according to whether the reference value exceeds or at least meets a threshold value.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a determiner unit 34 configured to determine a reference value, the reference value indicating a largest index corresponding to a bit within a circular buffer for at least one code block of a transport block, the at least one code block having been selected for transmission of the transport block. The determiner unit 34 may be configured to determine a condition based on the reference value; and based on the condition, perform an action related to processing of one or more code blocks of the transport block. In some embodiments, the processing circuitry 84 is configured to perform the action by being configured to perform one of skip decoding and partial skip decoding a reception of the one or more code blocks of the transport block based on the condition. In some embodiments, the processing circuitry 84 is configured to perform the action by being configured to perform one of a skip transmission and a partial skip transmission for a transmission of the one or more code blocks of the transport block based on the condition. In some embodiments, the condition includes whether the reference value exceeds or at least meets a threshold value. In some embodiments, the processing circuitry 84 is configured to perform the action by being configured to, if the reference value exceeds or at least meets a threshold, discard at least one received bit in the circular buffer for the one or more code blocks before decoding the bits in the circular buffer. In some embodiments, the transmission of the transport block includes at least one of an initial transmission and a retransmission.

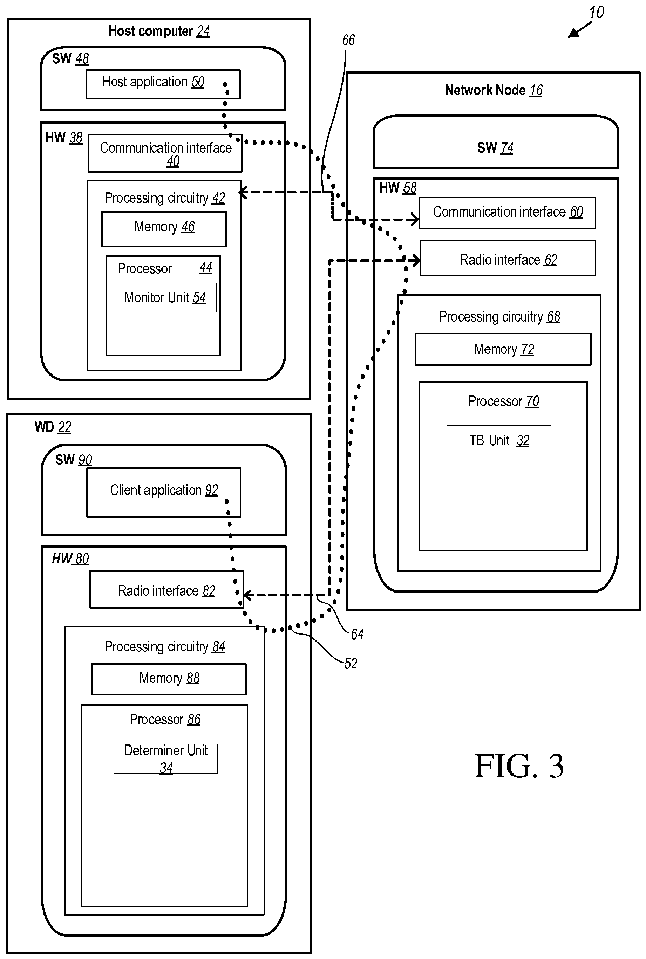

In some embodiments, the inner workings of the network node 16, WD 22, and host computer 24 may be as shown in FIG. 3 and independently, the surrounding network topology may be that of FIG. 2.

In FIG. 3, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 2 and 3 show various "units" such as transport block (RB) unit 32, and determiner unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

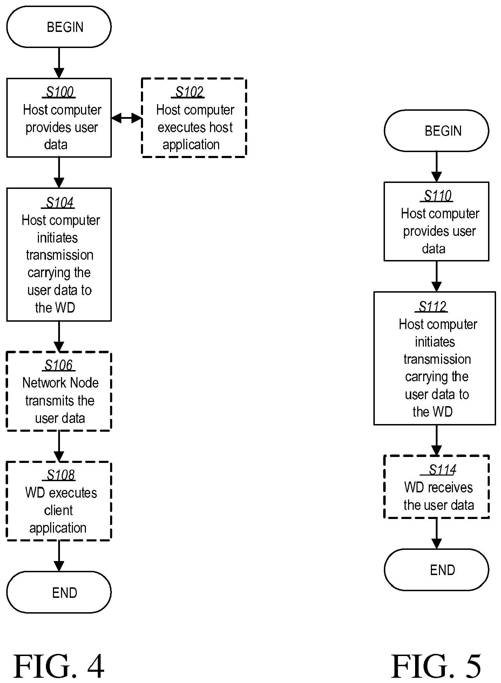

FIG. 4 is a flowchart illustrating an exemplary method implemented in a communication system, such as, for example, the communication system of FIGS. 2 and 3, in accordance with one embodiment. The communication system may include a host computer 24, a network node 16 and a WD 22, which may be those described with reference to FIG. 3. In a first step of the method, the host computer 24 provides user data (block S100). In an optional substep of the first step, the host computer 24 provides the user data by executing a host application, such as, for example, the host application 74 (block S102). In a second step, the host computer 24 initiates a transmission carrying the user data to the WD 22 (block S104). In an optional third step, the network node 16 transmits to the WD 22 the user data which was carried in the transmission that the host computer 24 initiated, in accordance with the teachings of the embodiments described throughout this disclosure (block S106). In an optional fourth step, the WD 22 executes a client application, such as, for example, the client application 114, associated with the host application 74 executed by the host computer 24 (block S108).

FIG. 5 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In a first step of the method, the host computer 24 provides user data (block S110). In an optional substep (not shown) the host computer 24 provides the user data by executing a host application, such as, for example, the host application 74. In a second step, the host computer 24 initiates a transmission carrying the user data to the WD 22 (block S112). The transmission may pass via the network node 16, in accordance with the teachings of the embodiments described throughout this disclosure. In an optional third step, the WD 22 receives the user data carried in the transmission (block S114).

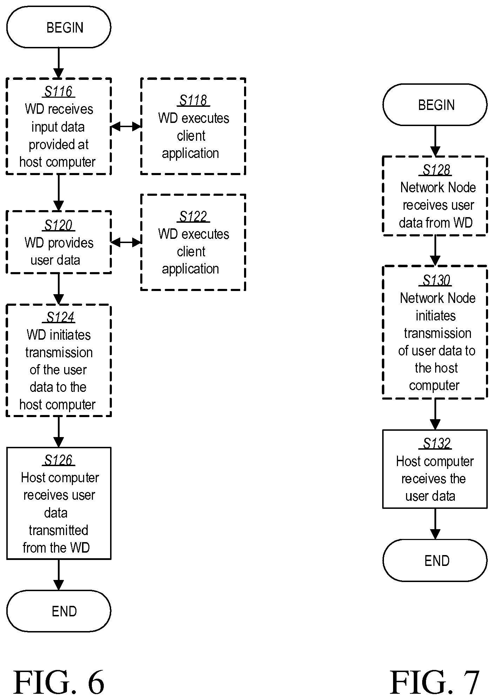

FIG. 6 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, the WD 22 receives input data provided by the host computer 24 (block S116). In an optional substep of the first step, the WD 22 executes the client application 114, which provides the user data in reaction to the received input data provided by the host computer 24 (block S118). Additionally or alternatively, in an optional second step, the WD 22 provides user data (block S120). In an optional substep of the second step, the WD provides the user data by executing a client application, such as, for example, client application 114 (block S122). In providing the user data, the executed client application 114 may further consider user input received from the user. Regardless of the specific manner in which the user data was provided, the WD 22 may initiate, in an optional third substep, transmission of the user data to the host computer 24 (block S124). In a fourth step of the method, the host computer 24 receives the user data transmitted from the WD 22, in accordance with the teachings of the embodiments described throughout this disclosure (block S126).

FIG. 7 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, in accordance with the teachings of the embodiments described throughout this disclosure, the network node 16 receives user data from the WD 22 (block S128). In an optional second step, the network node 16 initiates transmission of the received user data to the host computer 24 (block S130). In a third step, the host computer 24 receives the user data carried in the transmission initiated by the network node 16 (block S132).

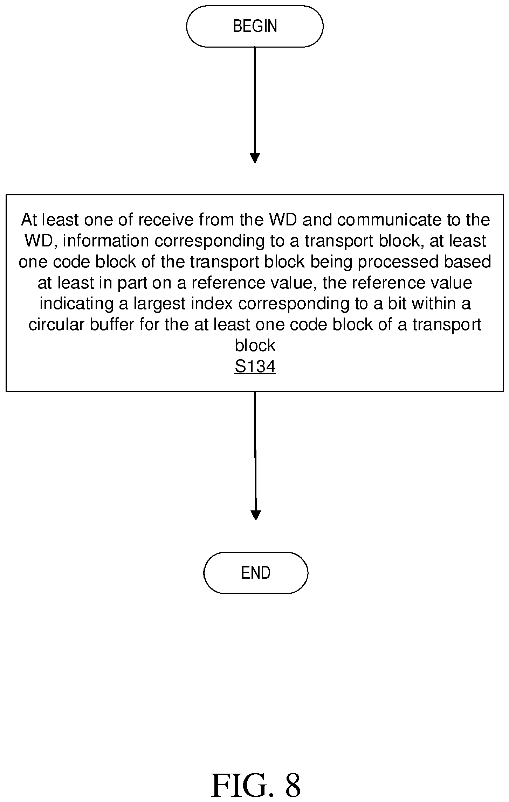

FIG. 8 is a flowchart of an exemplary process in a network node 16 according to some embodiments of the present disclosure. The process includes at least one of receiving from the WD 22 and communicating to the WD 22 (block S134), information corresponding to a transport block, at least one code block of the transport block being processed based at least in part on a reference value, the reference value indicating a largest index corresponding to a bit within a circular buffer for the at least one code block of a transport block. In some embodiments, the processing based at least in part on the reference value comprises one of skip decoding and partial skip decoding a reception of one or more code blocks of the transport block, based at least in part on the reference value. In some embodiments, the processing based at least in part on the reference value comprises one of a skip transmission and a partial skip transmission for a transmission of one or more code blocks of the transport block, based at least in part on the reference value. In some embodiments, the processing based at least in part on the reference value comprises processing according to whether the reference value exceeds or at least meets a threshold value.

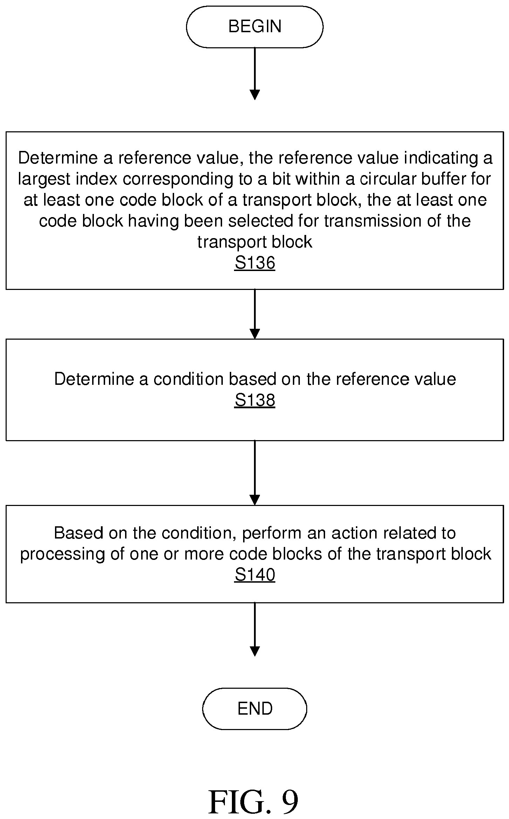

FIG. 9 is a flowchart of an exemplary process in a wireless device 22 according to some embodiments of the present disclosure. In some embodiments, the process includes determining (block S136) a reference value, the reference value indicating a largest index corresponding to a bit within a circular buffer for at least one code block of a transport block, the at least one code block having been selected for transmission of the transport block. The process includes determining (block S138) a condition based on the reference value. The process includes, based on the condition, performing (block S140) an action related to processing of one or more code blocks of the transport block. In some embodiments, the performing the action includes, based on the condition, one of skip decoding and partial skip decoding for a reception of the one or more code blocks of the transport block. In some embodiments, the performing the action includes, based on the condition, one of skip transmitting and partial skip transmitting for a transmission of the one or more code blocks of the transport block. In some embodiments, the condition includes whether the reference value exceeds or at least meets a threshold value. In some embodiments, performing the action includes, if the reference value exceeds or at least meets a threshold, discarding at least one received bit in the circular buffer for the one or more code blocks before decoding the bits in the circular buffer. In some embodiments, the transmission of the transport block includes at least one of an initial transmission and a retransmission.

Having generally described some embodiments for limited buffer rate-matching, a more detailed description of some of the embodiments is described below.

The 3GPP is defining technical specifications for New Radio (NR) (e.g., 5G). In release 15 (Rel-15) NR, the wireless device (WD) 22 can be configured with up to four carrier bandwidth parts (BWPs) in the downlink with a single downlink carrier bandwidth part being active at a given time. A WD 22 can be configured with up to four carrier bandwidth parts in the uplink with a single uplink carrier bandwidth part being active at a given time. If a WD 22 is configured with a supplementary uplink, the WD 22 can additionally be configured with up to four carrier bandwidth parts in the supplementary uplink with a single supplementary uplink carrier bandwidth part being active at a given time.

For a carrier bandwidth part with a given numerology $\mu_i$, a contiguous set of physical resource blocks (PRBs) may be defined and numbered from 0 to $N_{\mathrm{BWP},i}^{\mathrm{size}} - 1$, where $i$ is the index of the carrier bandwidth part. A resource block (RB) may be defined as 12 consecutive subcarriers in the frequency domain.

Numerologies

Multiple orthogonal frequency-division multiplexing (OFDM) numerologies, $\mu$, may be supported in NR as given by, for example, Table 1, where the subcarrier spacing, $\Delta f$, and the cyclic prefix for a carrier bandwidth part are configured by different higher layer parameters for downlink (DL) and uplink (UL), respectively.

Table 1: Supported transmission numerologies.

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Physical Channels

A downlink physical channel may correspond to a set of resource elements carrying information originating from higher layers. The following downlink physical channels may be defined:

- Physical Downlink Shared Channel, PDSCH
- Physical Broadcast Channel, PBCH
- Physical Downlink Control Channel, PDCCH.

PDSCH is the main physical channel used for unicast downlink data transmission, but also for transmission of random access response (RAR), certain system information blocks (SIBs), and paging information. PBCH carries the basic system information, required by the WD 22 to access the network. PDCCH is used for transmitting downlink control information (DCI), mainly scheduling decisions, required for reception of PDSCH, and for uplink scheduling grants enabling transmission on PUSCH.

An uplink physical channel may correspond to a set of resource elements carrying information originating from higher layers. The following uplink physical channels may be defined:

- Physical Uplink Shared Channel, PUSCH

- Physical Uplink Control Channel, PUCCH
- Physical Random Access Channel, PRACH.

PUSCH is the uplink counterpart to the PDSCH. PUCCH is used by WDs 22 to transmit uplink control information, including Hybrid Automatic Repeat Request (HARQ) acknowledgments, channel state information (CSI) reports, etc. PRACH is used for random access preamble transmission.

An example peak rate formula may be given by the following. For NR, the approximate data rate for a given number of aggregated carriers in a band or band combination may be computed as follows:

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

wherein:

- J may be the number of aggregated component carriers in a band or band combination
- $R_{\max} = 948/1024$
- For the j-th CC,

  $v_{Layers}^{(j)}$ is the maximum number of layers,

  $Q_m^{(j)}$ is the maximum modulation order,

  $f^{(j)}$ is the scaling factor (the scaling factor can take the values 1, 0.8, 0.75, and 0.4),

- $f^{(j)}$ is signalled per band and per band per band combination,
- $\mu$ is the numerology (as defined in TS 38.211 [6]),

- $T_s^{\mu}$ is the average OFDM symbol duration in a subframe for numerology $\mu$, i.e. $T_s^{\mu} = \dfrac{10^{-3}}{14 \cdot 2^{\mu}}$ (note that normal cyclic prefix is assumed),

- $N_{PRB}^{BW(j),\mu}$ is the maximum resource block (RB) allocation in bandwidth $BW^{(j)}$ with numerology $\mu$, as defined for example in Section 5.3 of TS 38.101-1 [2] and Section 5.3 of TS 38.101-2 [3], where $BW^{(j)}$ is the WD 22 supported maximum bandwidth in the given band or band combination, and
- $OH^{(j)}$ is the overhead and can take the following values:

    [0.14], for frequency range FR1 for DL;
    [0.18], for frequency range FR2 for DL;
    [0.08], for frequency range FR1 for UL; and
    [0.10], for frequency range FR2 for UL.

It should be noted that only one of the UL or Supplemental UL (SUL) carriers (the one with the higher data rate) may be counted for a cell operating SUL.

The approximate maximum data rate can be computed as the maximum of the approximate data rates computed using e.g., the above formula for each of the supported band or band combinations.

Data rate and maximum data rate

Data rate can be considered an important performance indicator for communication links, and that may also apply to 5G radio systems. Mobile vendors, mobile operators as well as network vendors typically use peak data rate as a key performance indicator (KPI) and may use it for promoting their respective products or solutions. The peak data rate can be an indicator of the processing, hardware, software and/or firmware capabilities from the device perspective, especially the decoder throughput for receiver operations and encoder throughputs for encoding operations. There may be a need to take into account the peak rate for utilization on a communication link in an unambiguous or more clear fashion (as compared to existing techniques) by the physical layer processing functions in a typical network scheduler or in a device.

Typically, data rate can be defined as maximum TBS bits (or information bits) per transmission time interval (TTI). Since both the max TBS bits and the transmission time interval can be variable e.g. in NR, the maximum across all computed data rates can be defined as the maximum data rate (maxDataRate) or the peak rate. Then, from a TBS perspective, a TB can be considered decodable by a decoder supporting a throughput of maxDataRate, if the transport block size does not exceed the maxDataRate*transmissionDuration. It should be noted that in a code block group (CBG) where an initial transmission or a retransmission of transport block includes only a portion of the transport block bits, the receiver may be expected to perform physical layer decoding of only a portion of the transport block bits and hence that can be a better indicator of the required decoder throughput. In certain scenarios such as LTE-NR dual connectivity, the overall peak data rate offered by a WD 22 can be expressed as sum total of the peak rates obtained from the NR and LTE links operating simultaneously. Since LTE and NR may use different encoding/decoding techniques, it may not be simple to enable hardware sharing of blocks such as low-density parity-check (LDPC) decode and turbo decoder, except for perhaps some minimal reuse. In the present disclosure, much of the description related to peak rate or maximum data rate may assume its applicability to only the NR portion of the link. For example, if LTE offers 1 Gbps and NR offers 1 Gbps, the WD's 22 total peak data rate across LTE and NR is 2 Gbps, while its NR peak rate or simply peak rate can be 1 Gbps.

For NR dynamic transmission duration L, the maximum TBS in L symbols in numerology of $\mu$ (e.g., $\mu = 0$ corresponds to 1 ms slot with 15 kHz SCS, $\mu=1$ is 0.5ms slot with 30 kHz SCS) can be given by, for example:

$$TBS_{max} \leq (L/14)*\text{max DataRate}*1e\text{-}3 * 2^{-\mu}.$$

LDPC coded bit throughput (or coded bit rate) can increase when the code rate at which a packet is decoded is lowered. For example, supporting a peak data rate of 5 Gbps at rate-2/3 can be much more efficient than supporting peak data rate at 1/3, because the former requires 5/(2/3) ~ 7.5 Gbps coded bit rate, while the latter requires approximately 15 Gbps coded bit rate; which can not only slow down the decoder, but also require extra hardware to support such rate and can increase storage, etc.

How to reflect the coded bit data rate constraint on the WD side

An example to take into account the coded bit rate is shown below:

- The WD 22 may skip decoding transport blocks with any transmissions in a 14 consecutive-symbol duration if any one transmission is not using Redundancy Version 0 (RV0) and when

$$2^{\mu-\mu_0} \cdot \sum_{i\in S} \frac{C'_i \cdot N_{cb,i}}{L_i} > \frac{1}{R_{LBRM}} \text{ (maximum data rate from TS 38.306)}$$

- Where

  - $R_{LBRM}$ = 2/3 as defined for example in TS 38.212,
  - The minimum subcarrier spacing for the component carrier may be defined as $15 \times 2^{\mu_0}$,
  - The subcarrier spacing of the current transmission for the component carrier is defined may be defined as $15 \times 2^{\mu}$ (e.g., as in TS 38.211),
  - S is the set of transmissions in a 14 consecutive-symbol duration,
  - $C'_i$ is the number of transmitted codeblocks for the transport block in transmission i accounting for CBG-based retransmission (e.g., TS 38.212),
  - $N_{cb,i}$ is the circular buffer size for the transport block in transmission i as defined in for example TS 38.212, and
  - $L_i$ is the number of symbols in the PDSCH transmission i.

One potential drawback for the above may be that the circular buffer does not change for a TB across transmissions. Thus, even if certain bits of the circular buffer are not transmitted, the corresponding TB can be blocked from scheduling.

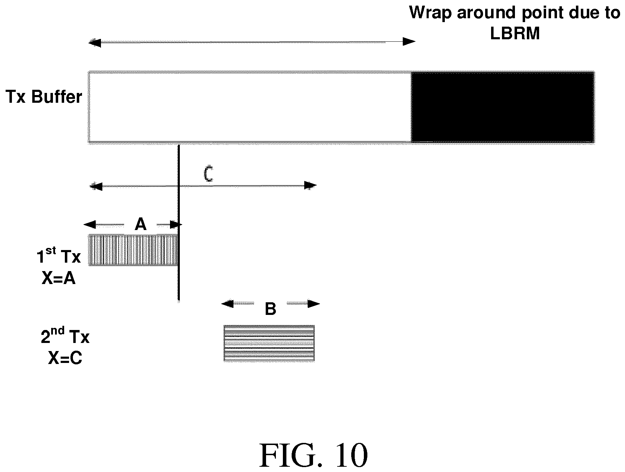

One enhancement is to utilize a more flexible mechanism. In this case, the network node 16 can utilize a reference value X that is used as input, which denotes the largest index corresponding to a bit within the circular buffer for a transport block that is selected either for initial transmission or a retransmission for the TB. The determination may be performed based on the initial transmission and/or the retransmission for the TB. For example, for the i-th transmission, X is determined based on transmissions up to and including the i-th transmission. Instead of Ncb,i, the value X calculated can be utilized for the TB in transmission i. FIG. 10 illustrates an example of the value of X for a first transmission and the value of X for a second transmission.

This formulation may assist with enabling the encoding and decoding operations to be more clearly specified, as compared to existing techniques, without confusion between the network node 16 and the WD 22.

Some additional embodiments are described below.

- In certain embodiments, the conditions can be applied at any arbitrary time duration and can provide that the instantaneous coded bit peak rate is not exceeded.
- In certain embodiments, the conditions can be satisfied for all reference slot durations (among the configured CCs).
- In certain embodiments, the conditions can be satisfied for a reference slot duration e.g. for FR1, 0.5 ms, and/or for FR1/FR2, the slot duration corresponding to the SCS associated with the data channel (for PDSCH, use SCS for downlink data channel, and for PUSCH, use SCS for the uplink data channel). The reference slot duration may be the shortest slot duration across all configured component carriers.
  ○ Note: FR1 refers to frequency range 1 or below 6GHz, and FR2 refers to frequency range 2 or mmWave frequencies.
- In certain embodiments, the conditions can be satisfied for a subset of reference slot durations e.g. for FR1, 1 and 0.5 ms, and/or for FR1/FR2, the slot duration corresponding to the SCS associated with the data channel (for PDSCH, use SCS for downlink data channel, and for PUSCH, use SCS for the uplink data channel).
- In certain embodiments, the component carrier used for determining the reference slot duration can be based on one or more WD 22 capabilities/configuration such as number of spatial layers supported, or a modulation scheme supported, receiver bandwidth etc. For instance, the carrier on which a back-loaded DMRS is configured.
- In certain embodiments, the sum TBS is based on the bandwidth part information for a corresponding slot of a component carrier in determining the number of information bits or reference information bits.
- In certain embodiments, the conditions can be applied per cell group. In dual connectivity, the conditions can be applied separately for each cell group.
- In certain embodiments, the conditions can be applied per PUCCH cell group per cell group. In dual connectivity, the conditions can be applied separately per PUCCH cell group for each cell group.
- In certain embodiments, the respective conditions are applied for carriers within a band in Carrier Aggregation (CA) case e.g. the maximum data rate may be calculated on carriers per-band or there may be certain constraints such as a semi-static constraint on the data rate among carriers of different bands.
- In certain embodiments, the respective conditions are applied for a carrier within a cell group or within a PUCCH cell group e.g. the maximum data rate can be calculated on the carriers per-band using only the scaling factor applicable for that band.
- In certain embodiments, the WD 22 is capable of Evolved Universal Terrestrial Radio Access (E-UTRA)-New Radio (NR) Dual Connectivity (DC) (EN-DC) or LTE-NR dual connectivity and/or is configured with LTE-NR dual connectivity, and the coded bit peak rate may be the coded bit peak rate corresponding to the NR portion of LTE-NR dual connectivity and the carriers are the carriers associated with the NR cells.
- In certain embodiments, the WD 22 may be capable of NR-NR DC (dual connectivity) and/or is configured with LTE-NR dual connectivity, and the coded bit peak rate is a coded bit peak rate corresponding to first NR macro cell group and the carriers are the carriers associated with the first NR primary cell group, and associated conditions are applicable within the first cell group. The peak rate may correspond to the first NR cell group determined from the band/band-combination signaling associated with the first NR cell group.

  ○ In some embodiments, the coded bit peak rate is a coded bit peak rate corresponding to the NR secondary cell group and the carriers are the carriers associated with the NR secondary cell group, and the associated conditions are applicable within the secondary cell group. The coded bit peak rate may correspond to the NR secondary cell group determined from the band/band-combination signaling associated with the secondary cell group.
  ○ For example, NR-NR DC may have a primary cell group corresponding to carriers in FR1, and a secondary cell group corresponding to carriers in FR2. A band/band combination for FR1 and FR2 can indicate support of NR-NR DC with the Master Cell Group (MCG) on FR1 and Secondary Cell Group (SCG) on FR2 (or vice-versa).

- In certain embodiments, the data rate is a maximum data rate based on the band/band combination signaling and configuration, which can be different or smaller than the coded bit peak rate, which can be the maximum of the data rate computed based on a plurality of band/band combinations signaled by the WD 22.

At least some of the embodiments discussed above can be generalized to any combination of transmissions durations on the carriers.

If the condition is not satisfied (i.e., is exceeded (e.g., X exceeds threshold)), there are some different options for WD 22 behaviour that may be implemented in different embodiments:

1) the WD 22 may consider such a scheduling as an error case,
2) the WD 22 may skip decoding the transport block(s); if the WD 22 skips decoding then it can indicate a negative acknowledgment (NACK) to the upper layers
a. the WD 22 may or may not be able to store and soft combine received information
3) the WD 22 may process the transport block(s) partially, e.g., provide an acknowledgment (ACK) for the TBs or CBGs that were proof cessed and NACK for the unfinished blocks to the network node 16;
4) For uplink, the WD 22 may not be able transmit since its transmission capability is exceeded, and hence may drop the transmission; if the different transmissions are scheduled by different PDCCHs occurring at different time instances, the WD 22 may continue to transmit any ongoing transmissions, while dropping any transmissions that may cause WD 22 transmission capability to be exceeded.

While the principles of the present disclosure are described primarily from an uplink or downlink perspective, the same principles are applicable for sidelink (SL), integrated access backhaul, and other forms of communication links in a cellular communication system, such as the system 10.

Information bits rate

In some embodiments, an initial transmission or retransmission for a transport block or code block groups of a transport block may not exceed the peak data rate for that component carrier. For NR, the dynamic transmission duration L, the maximum TBS that can be transmitted in L symbols in numerology of $\mu$ (e.g. $\mu = 0$ corresponds to 1ms slot with 15kHz SCS, $\mu = 1$ is 0.5ms slot with 30 kHz SCS) can be given by:

$$TBS \leq (L/14)*\max \text{DataRate}*1e\text{-}3 * 2^{-\mu},$$

where max Data rate is the data rate calculated for that component carrier, which is derived as a minimum across the data rate yielded for the component carrier based on band/band combination signaling, or by determining $TBS_{LBRM}$ based on the configuration of the component carrier and transmission duration for the $TBS_{LBRM}$ (e.g., slot duration).
Some embodiments of the present disclosure include the following:
In a first embodiment, embodiment 1, a method in a WD 22 of processing a transport block is provided, the method includes:

- determining a reference value X denoting the largest index corresponding to a bit within the circular buffer for at least one code block of the transport block that is selected for transmission of the TB;
- determine a condition based on X; and
- Based on the result of the condition, performing an action related to processing of one or more code blocks of the transport block.

The method of embodiment 1, wherein the action being one of a skip decoding, partial skip decoding for a reception of one or more code blocks of the transport block.
The method of embodiment 1, the action being one of a skip transmission, partial skip transmission for a transmission of the code block.
The method of embodiment 1, where if X is larger than a threshold, the WD 22 may discard some of the received bits within its circular buffer for one or more code blocks prior to decoding.
In a second embodiment, embodiment 2, a method in a WD 22 of processing a transport block is provided, the method including:

- determining a reference value X denoting the largest index corresponding to a bit within the circular buffer for at least one code block of the transport block that is selected for transmission and/or a retransmission of the TB;
- determine a condition based on X; and
- Based on the result of the condition, performing an action related to processing of one or more code blocks of the transport block.

The method of embodiment 1, the action being one of a skip decoding, partial skip decoding for a reception of one or more code blocks of the transport block.

The method of embodiment 1, the action being one of a skip transmission, partial skip transmission for a transmission of the code block.

Method of embodiment 1, where if X is larger than a threshold, the WD 22 may discard some of the received bits within its circular buffer for one or more code blocks prior to decoding.

Even though the descriptions herein may be explained in the context of one of a Downlink (DL) and an Uplink (UL) communication, it should be understood that the basic principles disclosed may also be applicable to the other of the one of the DL and the UL communication, as well as sidelink communications. In some embodiments in this disclosure, the principles may be considered applicable to a transmitter and a receiver. For DL communication, the network node 14 is the transmitter and the receiver is the WD 12. For the UL communication, the transmitter is the WD 12 and the receiver is the network node 14.

Any two or more embodiments described in this disclosure may be combined in any way with each other.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, different embodiments can be combined as set out in the appended claims.

Abbreviations that may be used in the preceding description include:

| Abbreviation | Description |
| --- | --- |
| TBS | Transport block size |
| SCS | Subcarrier spacing |
| eMBB | enhanced Mobile BroadBand |
| LTE | Long Term Evolution |
| NR | Next Radio |
| PDCCH | Physical Downlink Control Channel |
| PDSCH | Physical Downlink Shared Channel |
| PUSCH | Physical Uplink Shared Channel |
| UE | User Equipment |
| CC | Component Carrier |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings.

**Claims**

1. A network node (16) configured to communicate with a wireless device, WD (22), the network node comprises a radio interface (62) and a processing circuitry (68) configured to:

   - communicate to the WD, information corresponding to a transport block, at least one code block of the transport block being processed based at least in part on a reference value, the reference value indicating a largest index corresponding to a bit within a circular buffer for the at least one code block of a transport block, **characterized by** the processing based at least in part on the reference value comprises one of skip decoding and partial skip decoding a reception of one or more code blocks of the transport block, based at least in part on the reference value.

2. The network node of claim 1, wherein the processing based at least in part on the reference value comprises one of a skip transmission and a partial skip transmission for a transmission of one or more code blocks of the transport block, based at least in part on the reference value.

3. The network node of any one of claims 1-2, wherein the processing based at least in part on the reference value comprises processing according to whether the reference value exceeds or at least meets a threshold value.

4. A method implemented in a network node (16), the method comprising:

   - communicating (S134) to a wireless device, WD (22), information corresponding to a transport block, at least one code block of the transport block being processed based at least in part on a reference value, the reference value indicating a largest index corresponding to a bit within a circular buffer for the at least one code block of a transport block, **characterized by** the processing based at least in part on the reference value comprises one of skip decoding and partial skip decoding a reception of one or more code blocks of the transport block, based at least in part on the reference value.

5. The method of claim 4, wherein the processing based at least in part on the reference value comprises one of a skip transmission and a partial skip transmission for a transmission of one or more code blocks of the transport block, based at least in part on the reference value.

6. The method of any one of claims 4-5, wherein the processing based at least in part on the reference value comprises processing according to whether the reference value exceeds or at least meets a threshold value.

7. A wireless device, WD (22), configured to communicate with a network node (16), the WD comprising a radio interface (82) and a processing circuitry (84) configured to:

determine a reference value, the reference value indicating a largest index corresponding to a bit within a circular buffer for at least one code block of a transport block, the at least one code block having been selected for transmission of the transport block;
determine a condition based on the reference value; and
based on the condition, perform an action related to processing of one or more code blocks of the transport block, **characterized by**
the processing circuitry is configured to perform the action by being configured to perform one of skip decoding and partial skip decoding a reception of the one or more code blocks of the transport block based on the condition.

8. The WD of claim 7, wherein the processing circuitry is configured to perform the action by being configured to perform one of a skip transmission and a partial skip transmission for a transmission of the one or more code blocks of the transport block based on the condition.

9. The WD of any one of claims 9-11, wherein the condition includes whether the reference value exceeds or at least meets a threshold value.

10. The WD of any one of claims 7-9, wherein the processing circuitry is configured to perform the action by being configured to, if the reference value exceeds or at least meets a threshold, discard at least one received bit in the circular buffer for the one or more code blocks before decoding the bits in the circular buffer.

11. The WD of any one of claims 7-10, wherein the transmission of the transport block includes at least one of an initial transmission and a retransmission.

12. A method implemented in a wireless device, WD (22), the method comprising:

determining (S136) a reference value, the reference value indicating a largest index corresponding to a bit within a circular buffer for at least one code block of a transport block, the at least one code block having been selected for transmission of the transport block;
determining (S138) a condition based on the reference value; and
based on the condition, performing (S140) an action related to processing of one or more code blocks of the transport block, **characterized by**
the performing the action includes, based on the condition, one of skip decoding and partial skip decoding for a reception of the one or more code blocks of the transport block.

13. The method of claim 12, wherein the performing the action includes, based on the condition, one of skip transmitting and partial skip transmitting for a transmission of the one or more code blocks of the transport block.

14. The method of any one of claims 12-13, wherein the condition includes whether the reference value exceeds or at least meets a threshold value.

15. The method of any one of claims 12-14, wherein performing the action includes, if the reference value exceeds or at least meets a threshold, discarding at least one received bit in the circular buffer for the one or more code blocks before decoding the bits in the circular buffer.

16. The method of any one of claims 12-15, wherein the transmission of the transport block includes at least one of an initial transmission and a retransmission.

**Patentansprüche**

1. Netzwerkknoten (16), der konfiguriert ist, um mit einer drahtlosen Vorrichtung, WD (22), zu kommunizieren, wobei der Netzwerkknoten eine Funkschnittstelle (62) und Verarbeitungsschaltungen (68) umfasst, die konfiguriert sind zum:

- Mitteilen an die WD von Informationen, die einem Transportblock entsprechen, wobei mindestens ein Codeblock des Transportblocks basierend mindestens teilweise auf einem Referenzwert verarbeitet wird, wobei der Referenzwert einen größten Index angibt, der einem Bit in einem Ringpuffer für den mindestens einen Codeblock eines Transportblocks entspricht,

**dadurch gekennzeichnet, dass** die mindestens teilweise auf dem Referenzwert basierende Verarbeitung eines von Sprungdecodieren und Teilsprungdecodieren eines Empfangs von einem oder mehreren Codeblöcken des Transportblocks, basierend mindestens teilweise auf dem Referenzwert, umfasst.

2. Netzwerkknoten nach Anspruch 1, wobei die mindestens teilweise auf dem Referenzwert basierende Verarbeitung eines von einer Sprungübertragung und einer Teilsprungübertragung für eine Übertragung eines oder mehrerer Codeblöcke des Transportblocks, basierend mindestens teilweise auf dem Referenzwert, umfasst.

3. Netzwerkknoten nach einem der Ansprüche 1 bis 2, wobei die mindestens teilweise auf dem Referenzwert basierende Verarbeitung eine Verarbeitung je nachdem, ob der Referenzwert einen Schwellenwert überschreitet oder wenigstens erreicht, umfasst.

4. Verfahren, das in einem Netzwerkknoten (16) umgesetzt wird, wobei das Verfahren umfasst:

   - Mitteilen (S134) an eine drahtlose Vorrichtung, WD (22), von Informationen, die einem Transportblock entsprechen, wobei mindestens ein Codeblock des Transportblocks basierend mindestens teilweise auf einem Referenzwert verarbeitet wird, wobei der Referenzwert einen größten Index angibt, der einem Bit in einem Ringpuffer für den mindestens einen Codeblock eines Transportblocks entspricht,
   **dadurch gekennzeichnet, dass** die mindestens teilweise auf dem Referenzwert basierende Verarbeitung eines von Sprungdecodieren und Teilsprungdecodieren eines Empfangs von einem oder mehreren Codeblöcken des Transportblocks, basierend mindestens teilweise auf dem Referenzwert, umfasst.

5. Verfahren nach Anspruch 4, wobei die mindestens teilweise auf dem Referenzwert basierende Verarbeitung eine von einer Sprungübertragung und einer Teilsprungübertragung für eine Übertragung eines oder mehrerer Codeblöcke des Transportblocks, basierend mindestens teilweise auf dem Referenzwert, umfasst.

6. Verfahren nach einem der Ansprüche 4 bis 5, wobei die mindestens teilweise auf dem Referenzwert basierende Verarbeitung eine Verarbeitung je nachdem, ob der Referenzwert einen Schwellenwert überschreitet oder wenigstens erreicht, umfasst.

7. Drahtlose Vorrichtung, WD (22), die konfiguriert ist, um mit einem Netzwerkknoten (16) zu kommunizieren, wobei die WD eine Funkschnittstelle (82) und Verarbeitungsschaltungen (84) umfasst, die konfiguriert sind zum:

   Bestimmen eines Referenzwertes, wobei der Referenzwert einen größten Index angibt, der einem Bit in einem Ringpuffer für mindestens einen Codeblock eines Transportblocks entspricht, wobei der mindestens eine Codeblock zur Übertragung des Transportblocks ausgewählt wurde;
   Bestimmen einer Bedingung basierend auf dem Referenzwert; und
   basierend auf der Bedingung, Ausführen einer Aktion bezüglich der Verarbeitung eines oder mehrerer Codeblöcke des Transportblocks,
   **dadurch gekennzeichnet, dass** die Verarbeitungsschaltungen konfiguriert sind, um die Aktion auszuführen, indem sie konfiguriert sind, um eines von Sprungdecodieren und Teilsprungdecodieren eines Empfangs des eines oder der mehreren Codeblöcke des Transportblocks basierend auf der Bedingung auszuführen.

8. WD nach Anspruch 7, wobei die Verarbeitungsschaltungen konfiguriert sind, um die Aktion auszuführen, indem sie konfiguriert sind, um eine von einer Sprungübertragung und einer Teilsprungübertragung für eine Übertragung des einen oder der mehreren Codeblöcke des Transportblocks basierend auf der Bedingung auszuführen.

9. WD nach einem der Ansprüche 9 bis 11, wobei die Bedingung umfasst, ob der Referenzwert einen Schwellenwert überschreitet oder wenigstens erreicht.

10. WD nach einem der Ansprüche 7 bis 9, wobei die Verarbeitungsschaltungen konfiguriert sind, um die Aktion auszuführen, indem sie konfiguriert sind, falls der Referenzwert eine Schwelle überschreitet oder wenigstens erreicht, um mindestens ein empfangenes Bit in dem Ringpuffer für den einen oder die mehreren Codeblöcke vor dem Decodieren der Bits in dem Ringpuffer zu verwerfen.

11. WD nach einem der Ansprüche 7 bis 10, wobei die Übertragung des Transportblocks mindestens eine von einer anfänglichen Übertragung und einer erneuten Übertragung umfasst.

**12.** Verfahren, das in einer drahtlosen Vorrichtung, WD (22), umgesetzt wird, wobei das Verfahren umfasst:

Bestimmen (S136) eines Referenzwertes, wobei der Referenzwert einen größten Index angibt, der einem Bit in einem Ringpuffer für mindestens einen Codeblock eines Transportblocks entspricht, wobei der mindestens eine Codeblock zur Übertragung des Transportblocks ausgewählt wurde;
Bestimmen (S138) einer Bedingung basierend auf dem Referenzwert; und
basierend auf der Bedingung, Ausführen (S140) einer Aktion bezüglich der Verarbeitung eines oder mehrerer Codeblöcke des Transportblocks,
**dadurch gekennzeichnet, dass** das Ausführen der Aktion basierend auf der Bedingung eines von Sprungdecodieren und Teilsprungdecodieren für einen Empfang des eines oder der mehreren Codeblöcke des Transportblocks umfasst.

**13.** Verfahren nach Anspruch 12, wobei das Ausführen der Aktion basierend auf der Bedingung eines von Sprungübertragen und Teilsprungübertragen für eine Übertragung des einen oder der mehreren Codeblöcke des Transportblocks umfasst.

**14.** Verfahren nach einem der Ansprüche 12 bis 13, wobei die Bedingung umfasst, ob der Referenzwert einen Schwellenwert überschreitet oder wenigstens erreicht.

**15.** Verfahren nach einem der Ansprüche 12 bis 14, wobei das Ausführen der Aktion, falls der Referenzwert eine Schwelle überschreitet oder wenigstens erreicht, das Verwerfen mindestens eines empfangenen Bits in dem Ringpuffer für den einen oder die mehreren Codeblöcke vor dem Decodieren der Bits in dem Ringpuffer umfasst.

**16.** Verfahren nach einem der Ansprüche 12 bis 15, wobei die Übertragung des Transportblocks mindestens eine von einer anfänglichen Übertragung und einer erneuten Übertragung umfasst.


**Revendications**

**1.** Nœud de réseau (16) configuré pour communiquer avec un dispositif sans fil, WD (22), le nœud de réseau comprend une interface radio (62) et un circuit de traitement (68) configuré pour :

- communiquer au WD, des informations correspondant à un bloc de transport, au moins un bloc de code du bloc de transport en cours de traitement basé au moins en partie sur une valeur de référence, la valeur de référence indiquant un indice le plus grand correspondant à un bit dans un tampon circulaire pour l'au moins un bloc de code d'un bloc de transport, **caractérisé en ce que**
le traitement basé au moins en partie sur la valeur de référence comprend l'un parmi un décodage par saut et un décodage par saut partiel d'une réception d'un ou de plusieurs blocs de code du bloc de transport, basée au moins en partie sur la valeur de référence.

**2.** Nœud de réseau selon la revendication 1, dans lequel le traitement basé au moins en partie sur la valeur de référence comprend l'une parmi une transmission par saut et une transmission par saut partielle pour une transmission d'un ou de plusieurs blocs de code du bloc de transport, basée au moins en partie sur la valeur de référence.

**3.** Nœud de réseau selon l'une quelconque des revendications 1 et 2, dans lequel le traitement basé au moins en partie sur la valeur de référence comprend un traitement selon que la valeur de référence dépasse ou au moins atteint une valeur seuil.

**4.** Procédé mis en œuvre dans un nœud de réseau (16), le procédé comprenant :

- la communication (S134) à un dispositif sans fil, WD (22), des informations correspondant à un bloc de transport, au moins un bloc de code du bloc de transport étant traité sur la base au moins en partie d'une valeur de référence, la valeur de référence indiquant un indice le plus grand correspondant à un bit dans un tampon circulaire pour l'au moins un bloc de code d'un bloc de transport, **caractérisé en ce que** le traitement basé au moins en partie sur la valeur de référence comprend l'un parmi un décodage par saut et un décodage par saut partiel d'une réception d'un ou de plusieurs blocs de code du bloc de transport, basée au moins en partie sur la valeur de référence.

**5.** Procédé selon la revendication 4, dans lequel le traitement basé au moins en partie sur la valeur de référence comprend l'une parmi une transmission de saut et une transmission de saut partiel pour une transmission d'un ou de plusieurs blocs de code du bloc de transport, basée au moins en partie sur la valeur de référence.

**6.** Procédé selon l'une quelconque des revendications 4 à 5, dans lequel le traitement basé au moins en partie sur la valeur de référence comprend un traitement selon que la valeur de référence dépasse ou au moins atteint une valeur seuil.

**7.** Dispositif sans fil, WD (22), configuré pour communiquer avec un nœud de réseau (16), le WD comprenant une interface radio (82) et un circuit de traitement (84) configuré pour :

déterminer une valeur de référence, la valeur de référence indiquant un indice le plus grand correspondant à un bit dans un tampon circulaire pour au moins un bloc de code d'un bloc de transport, l'au moins un bloc de code ayant été sélectionné pour la transmission du bloc de transport ;
déterminer une condition basée sur la valeur de référence ; et
sur la base de la condition, exécuter une action liée au traitement d'un ou de plusieurs blocs de code du bloc de transport, **caractérisé en ce que**
le circuit de traitement est configuré pour exécuter l'action en étant configuré pour exécuter l'un parmi un décodage par saut et un décodage par saut partiel d'une réception du ou des blocs de code du bloc de transport sur la base de la condition.

**8.** WD selon la revendication 7, dans lequel le circuit de traitement est configuré pour exécuter l'action en étant configuré pour exécuter l'une parmi une transmission par saut et une transmission par saut partielle pour une transmission du ou des blocs de code du bloc de transport sur la base de la condition.

**9.** WD selon l'une quelconque des revendications 9 à 11, dans lequel la condition inclut si la valeur de référence dépasse ou au moins atteint une valeur seuil.

**10.** WD selon l'une quelconque des revendications 7 à 9, dans lequel le circuit de traitement est configuré pour exécuter l'action en étant configuré pour rejeter, si la valeur de référence dépasse ou au moins atteint un seuil, au moins un bit reçu dans le tampon circulaire pour le ou les blocs de code avant de décoder les bits dans le tampon circulaire.

**11.** WD selon l'une quelconque des revendications 7 à 10, dans lequel la transmission du bloc de transport inclut au moins l'une parmi une transmission initiale et une retransmission.

**12.** Procédé mis en œuvre dans un dispositif sans fil, WD (22), le procédé comprenant :

la détermination (S136) d'une valeur de référence, la valeur de référence indiquant un indice le plus grand correspondant à un bit dans un tampon circulaire pour au moins un bloc de code d'un bloc de transport, l'au moins un bloc de code ayant été sélectionné pour la transmission du bloc de transport ;
la détermination (S138) d'une condition basée sur la valeur de référence ; et
sur la base de la condition, l'exécution (S140) d'une action liée au traitement d'un ou de plusieurs blocs de code du bloc de transport, **caractérisé en ce que**
l'exécution de l'action inclut, sur la base de la condition, l'un parmi un décodage par saut et un décodage par saut partiel pour une réception du ou des blocs de code du bloc de transport.

**13.** Procédé selon la revendication 12, dans lequel l'exécution de l'action inclut, sur la base de la condition, l'une parmi une transmission par saut et une transmission par saut partielle pour une transmission du ou des blocs de code du bloc de transport.

**14.** Procédé selon l'une quelconque des revendications 12 et 13, dans lequel la condition inclut si la valeur de référence dépasse ou au moins atteint une valeur seuil.

**15.** Procédé selon l'une quelconque des revendications 12 à 14, dans lequel l'exécution de l'action inclut, si la valeur de référence dépasse ou atteint au moins un seuil, le rejet d'au moins un bit reçu dans le tampon circulaire pour le ou les blocs de code avant de décoder les bits dans le tampon circulaire.

**16.** Procédé selon l'une quelconque des revendications 12 à 15, dans lequel la transmission du bloc de transport inclut au moins l'une parmi une transmission initiale et une retransmission.

f = 15 kHz
Δ

One resource element

One OFDM symbol including cyclic prefix

FIG. 1

EP 3 841 692 B1

FIG. 2

10

**Host computer** 24

**SW** 48

Host application 50

**HW** 38

Communication interface 40

Processing circuitry 42

Memory 46

Processor 44

Monitor Unit 54

66

**Network Node** 16

**SW** 74

**HW** 58

Communication interface 60

Radio interface 62

Processing circuitry 68

Memory 72

Processor 70

TB Unit 32

**WD** 22

**SW** 90

Client application 92

**HW** 80

Radio interface 82

Processing circuitry 84

Memory 88

Processor 86

Determiner Unit 34

64

52

FIG. 3

BEGIN

S100
Host computer
provides user
data

⟷

S102
Host computer
executes host
application

S104
Host computer
initiates
transmission
carrying the
user data to
the WD

S106
Network Node
transmits the
user data

S108
WD executes
client
application

END

FIG. 4

BEGIN

S110
Host computer
provides user
data

S112
Host computer
initiates
transmission
carrying the
user data to
the WD

S114
WD receives
the user data

END

FIG. 5

BEGIN

S116
WD receives
input data
provided at
host computer

S118
WD executes
client
application

S120
WD provides
user data

S122
WD executes
client
application

S124
WD initiates
transmission
of the user
data to the
host computer

S126
Host computer
receives user
data
transmitted
from the WD

END

FIG. 6

BEGIN

S128
Network Node
receives user
data from WD

S130
Network Node
initiates
transmission
of user data to
the host
computer

S132
Host computer
receives the
user data

END

FIG. 7

BEGIN

At least one of receive from the WD and communicate to the WD, information corresponding to a transport block, at least one code block of the transport block being processed based at least in part on a reference value, the reference value indicating a largest index corresponding to a bit within a circular buffer for the at least one code block of a transport block
S134

END

FIG. 8

BEGIN

Determine a reference value, the reference value indicating a largest index corresponding to a bit within a circular buffer for at least one code block of a transport block, the at least one code block having been selected for transmission of the transport block
S136

Determine a condition based on the reference value
S138

Based on the condition, perform an action related to processing of one or more code blocks of the transport block
S140

END

FIG. 9

**FIG. 10**